# EUROPEAN PATENT SPECIFICATION

(11) **EP 1 413 160 B1**
(45) Date of publication and mention of the grant of the patent: **15.06.2011**
(21) Application number: 02740959.8
(22) Date of filing: 16.07.2002
(51) Int. Cl.: H04W 8/26

(54) **SYSTEM, METHOD AND SMART CARD FOR ACCESSING A PLURALITY OF NETWORKS**
SYSTEM, VERFAHREN UND CHIP-KARTE FÜR DEN ZUGRIFF AUF MEHRERE NETZE
SYSTEME, PROCEDE ET CARTE A PUCE D'ACCES A UNE PLURALITE DE RESEAUX

(30) Priority: 27.07.2001 GB 0118406; 22.08.2001 GB 0120456
(43) Date of publication of application: 28.04.2004
(73) Proprietor: Vodafone Group PLC, Newbury Berkshire RG14 2FN (GB)
(72) Inventor: MAYES, Keith, Edward, Hungerford RG17 0LA (GB)
(74) Representative: Harries, Simon George
(86) International application number: PCT/GB2002/003252
(87) International publication number: WO 2003/013172

(56) References cited:
- GB-A- 2 315 387
- US-A- 5 884 168

## Description

### Field of the Invention

The invention relates to telecommunications systems and methods. Embodiments of the invention to be described in more detail below, by way of example only, are mobile telecommunications systems which use smart cards in the form of subscriber identity modules µ(SIMs) which carry identification and authenticating information by means of which a telecommunications network forming part of the system can identify a telecommunications terminal within the system and authorise it to function in the system. For example, a SIM may be personal to a particular individual, by means of which that individual can activate a telecommunications terminal (e.g. a telephone handset) and use it for telecommunications purposes within the system. In another example, however, a SIM may be used in a telematics application to identify a particular telematics terminal, source or node for use in the system.

### Background Art

GB-A-2 315 3 87 discloses an arrangement for allowing a mobile terminal to register for multiple services provided by different networks.

EP-A-0 562 890 discloses a procedure for transmitting updating signals to the SIM of a mobile terminal.

US-A-5 881 235 relates to a system where the home location register (HLR) address stored in a mobile terminal can be set remotely on initial activation of a mobile terminal, and can be subsequently updated when the terminal relocates to a different service area covered by a different HLR.

US-A-5 884 168 discloses a multi-mode mobile station for which if a certain type of cellular telecommunications system is selected for mobile station operation, and an inserted SIM card fails to include the necessary communications standard required subscription information for that type of system, the common information is extracted from the SIM card and used in combination with internal memory stored unique information specific to the selected type of system in effectuating mobile station operation.

### Brief Summary of the Invention

According to the invention, there is provided a mobile telecommunications system, comprising a plurality of different predetermined networks; a plurality of terminals for use in the system; a plurality of smart cards, each terminal being usable in a particular one of the networks in association with one of the smart cards when that smart card is registered with that network; and registration means for registering each smart card with a particular one of the networks as its home network, each smart card carrying secret information specific to the home network with which the smart card is registered and by means of which that network can authenticate the smart card and allow use of the terminal with which that smart card is associated in that network; and characterised in that the registration means is operable to de-register each smart card from the network with which it is registered as its home network and to re-register each smart card with a common further network as its home network, and which is not included in the predetermined networks, by the registration means obtaining from said one of the networks data including an International Mobile Subscriber Identifier - IMSI - particular to and for use with that network, transmitting said IMSI to the smart card, and activating the secret information relating to a particular one of the networks when registering or re-registering the smart card with that network.

According to the invention, there is also provided a mobile telecommunications method for use with a plurality of different predetermined networks, a plurality of terminals and a plurality of smart cards, each terminal being usable in a particular one of the networks in association with one of the smart cards when that smart card is registered with that network, and each smart card carrying secret information specific to the home network with which the smart card is registered and by means of which that network can authenticate the smart card and allow use of the terminal with which that smart card is associated in that network; the method including registering each smart card with a particular one of the networks as its home network, and characterised by selectively de-registering each smart card from the network with which it is registered as its home network and re-registering each smart card with a common further network as its home network, and which is not included in the predetermined networks, by obtaining from said one of the networks data including an International Mobile Subscriber Identifier - IMSI - particular to and for use with that network, transmitting said IMSI to the smart card, and activating the secret information relating to a particular one of the networks when registering or re-registering the smart card with that network.

The system to be described in the embodiments is concerned with registering/de-registering with a network. In registering for a network, authentication of the user and network takes place, this involves passing secret information between the terminal and the network.

### Brief Description of the Drawings

Telecommunications systems and methods embodying the invention will now be described, by way of example only, with reference to the accompanying diagrammatic drawings, in which:
Figure 1 illustrates operations in one of the systems; and
Figure 2 is a flow chart showing those operations.

### Detailed Description of Embodiments of the Invention

In mobile telecommunications systems such as of the GSM or UMTS (third generation or 3G type) transmitting and receiving terminals (telephone handsets, for example) are provided with individual smart cards or SIM cards which are used to activate the terminals. In such a case, the SIM cards will be specific to the customers and will carry information particular to each customer such as the customer's IMSI (International Mobile Subscriber Identifier) together with authentication information. Using the SIM card, the customer can activate their handset or, in general, any other suitable handset. The SIM card may also store other information such as the customer's list of memorised telephone numbers.

In telematics applications, SIM cards are also used for analogous purposes - providing the relevant identification (IMSI) and authentication information for each telematics terminal.

In each case, each SIM card will be specific to a particular network (the "home" network) - that is, it will have been issued under the control of the operator of that network and will be for use within that network. In many cases, of course, the SIM card may permit roaming of the associated terminal into other, pre-recognised, networks. In known fashion, the network operator will order a SIM card (or, of course, a batch of such cards in practice) from a SIM supplier. The SIM supplier, who will be in the position of a trusted supplier to the network operator, will use information which it already holds to generate the SIM card bearing the necessary identification and authentication information and a particular IMSI. The SIM manufacturer will then supply the SIM card to a terminal manufacturer such as a manufacturer of a telephone handset, a telematics terminal or some other terminal for use in the network. The SIM supplier will also advise the network operator of the data loaded onto the SIM card. In due course, the terminal will be supplied to a customer. At that stage, the network operator will activate the SIM card, making use of the information concerning the SIM cards already supplied to it by the SIM supplier.

The SIM card, and thus the terminal associated with it, are now active and can be used in the network.

However, in view of developments in mobile telecommunications systems and particularly (though not only) in telematics applications, such a known arrangement may no longer be completely satisfactory. For example, a telematics terminal with its SIM card may be incorporated into a product when located in one country (for example, during manufacture of the product) but the product may then be exported for use in another country. The eventual destination of the product may be unknown at the time when the terminal and its SIM card are incorporated into the product. For example, a telematics terminal may be incorporated into a vehicle for use not only for providing telephone and data services for an occupant of the vehicle but also for transmitting other information relating to the operation of the vehicle such as, for example, concerning its maintenance or breakdown or relating to its position. In such a case, the initial home network for the SIM card may be a network in the country where the vehicle is manufactured and where the telematics terminal is installed. Thus, it may be necessary to render the SIM card active at this stage in order to enable testing and set-up to be carried out. However, the vehicle may then be exported to another country where it will actually be used or primarily used - in which case it will be necessary for the SIM card to be registered to a different home network. Therefore, the known arrangement for activating SIM cards, as described above, would not be suitable or could not be used without considerable difficulty.

Similarly, if a telematics terminal with its associated SIM card is in use within a product and functioning within a particular operating company's network, problems will arise if the product is then moved permanently into a different geographical region not covered by the network with which it is registered. Although roaming of a terminal into a different network is possible, this is intended for short term movements of a terminal into the different network, not a substantially permanent or long term transfer.

In such cases, it would of course be possible to deal with the problem simply by issuing a new SIM card upon the transfer of the product including the telematics terminal into the area of a different network. However, this could be logistically difficult in practice, and, additionally, could have the result that useful information placed on the previous SIM card would be lost.

The system and method now to be described enable a SIM card registered with a particular network (its "home" network) to be re-registered with a different network (or any one of several different networks) - which thus becomes its new home network. The networks with which the SIM card can be registered form a group of predetermined networks and may, for example, be networks in different countries all owned or controlled together. More specifically, however, one of the networks may be a common network which in fact encompasses all or some of the networks in the different countries or is otherwise a network covering an area extending over the areas covered by two or more of the networks in the different countries.

One way in which this can be achieved is shown in the Figures.

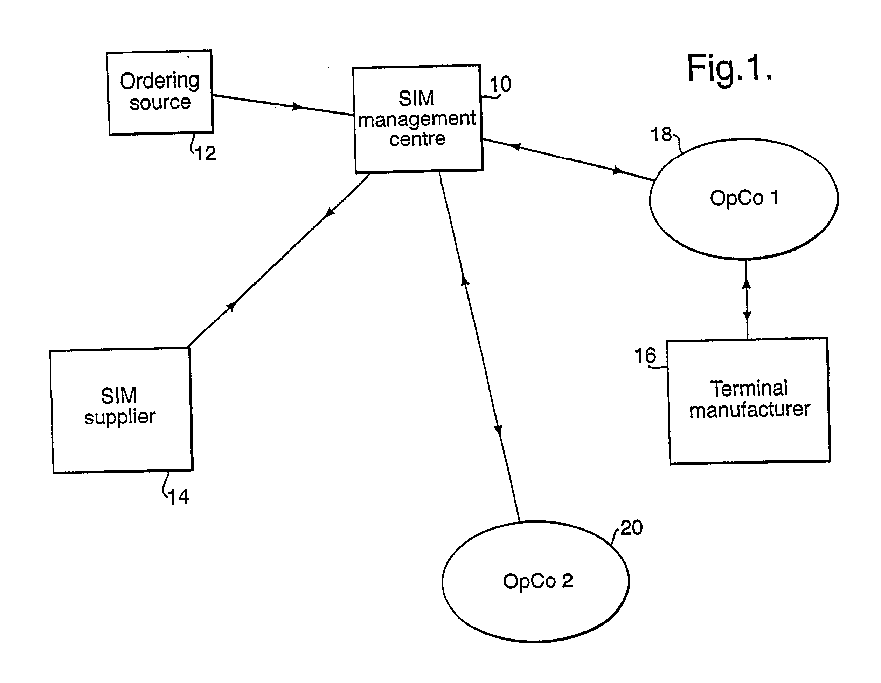

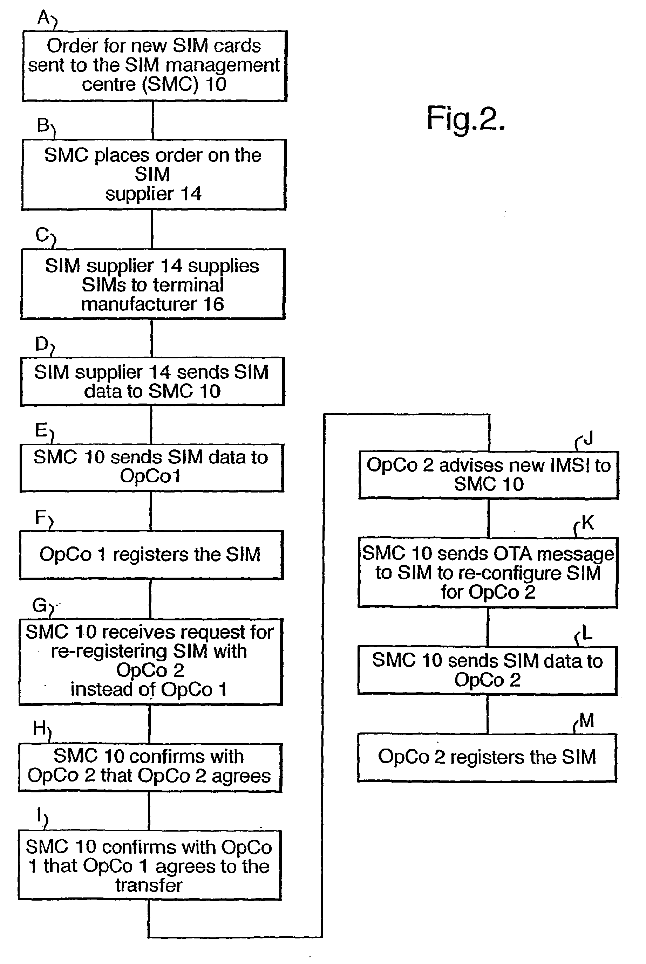

As shown in Figure 1, a SIM management centre 10 is provided. This can be located anywhere. For example, where the group of networks are all owned or controlled in common, the SIM management centre 10 can be located at the controlling entity. Orders for the supply of a new batch of SIM cards are received by the SIM management centre 10 from an ordering source 12 (Step A, Figure 2). Such a source might, for example, be any one of the group of networks. In response to such an order, the SIM management centre 10 places the order on a SIM supplier 14 (or on a particular one of several such suppliers (Step B, Figure 2)). The order will identity the particular network in the group of networks in which the SIM card is to be used initially (that is, the first home network).

The SIM card supplier 14 now manufactures the SIM cards, placing all the necessary information on them. This information will of course be relevant to the particular home network for which the SIM card is intended. The information will thus include the IMSI and also a record providing all the secret information specific to the operator of that particular network (secret keys, OTA transport key, parameters for the particular operator's algorithm and others) which is required for authenticating the SIM card in use; the SIM supplier will obtain this secret information from information which it already has and which, of course, it maintains in a secure fashion. In addition, a common SIM mask may be stored on the SIM card, for example, a mask particular to the entity owning or controlling the networks.

In accordance with a particular feature of the invention, and for a purpose to be explained, the SIM supplier also includes on the SIM card similar records for the operator-specific security secret information relating to all the other networks in the group. In other words, the SIM card includes a storage space containing multiple records relating to operator-specific secret information for each of the networks in the group. Additional records containing information for networks which may join the group in the future may also be provided. In addition, a record is included corresponding to a "common" network, which could be a "virtual network" not yet actually existing but which might represent an amalgamation of or embracing the areas of some or all of the networks in the group. Each of these records is in principle separately activatable. Initially, however, only the record applicable to the operator of the network in which the SIM card is to be initially registered is activated.

The SIM card is now sent by the SIM supplier 14 to a terminal manufacturer 16 such as a manufacturer oftelematics terminals (Step C). Details of the information which the SIM manufacturer has placed on the SIM card are sent back to the SIM management centre 10 (Step D). At this stage, the SIM card is not yet activated.

The SIM management centre 10 now passes the details of the particular SIM card to the operating company (OpCo 1) 18 of the network in which the SIM card is to be initially used (Step E). Thus, OpCo 1 receives the IMSI for the SIM card, and details of the relevant operator-specific secret information. This step thus corresponds to the step in the known process described above, where the SIM supplier supplies all this information, in relation to a newly manufactured SIM card, to the operating company. Preferably, the SIM management centre 10 supplies all this information to OpCo 1, 18, in the same format as the operating company would receive this information direct from the SIM manufacturer in the known process.

When the terminal manufacturer has associated the SIM card with the telematics terminal, and the terminal is ready for use (for example, it has been incorporated into a particular product such as a vehicle as described above), the SIM card is now ready for activation. The activation process will be carried out by OpCo 1 using OTA transmissions in the usual way (Step F). The SIM card, and thus the associated terminal, are now "live" in the network of OpCo 1 which is thus the home network for that SIM card.

It will now be assumed that it is necessary for the SIM card to be registered with a different network as its home network. Thus, such a re-registering request may be generated by an operating company 20 ("OpCo 2"), being the operator of another one of the networks in the group of networks and in which the telematics terminal with which the particular SIM card is associated is now primarily located. This re-registering request may be generated in various different ways. For example, it may be generated by a specific request made by the person in charge of the product containing the telematics terminal. However the request originates, it is passed to the ordering source 12 and then sent to the SIM management centre 10 (Step G).

The SIM management centre 10 now confirms with OpCo 2 that OpCo 2 is prepared to become the home network of the SIM card (Step H). If this confirmation is received, the SIM management centre 10 then confirms that OpCo 1 is prepared to release the SIM card (Step I). This process may involve requesting confirmation from the particular user that such release and transfer to OpCo 2 is agreed. Assuming that OpCo 1 confirms release, OpCo 2 informs the SIM management centre 10 of the new IMSI which SIM card will now need (Step J).

The SIM management centre 10 now sends an OTA message to the SIM card, to enable it to be registered with OpCo 2 instead of OpCo 1 (Step K). This message would include the new IMSI for the SIM card which will have been obtained from OpCo 2 (at Step J). In addition, the OTA message will access the part of the SIM card storing the records mentioned above relating to the operator-specific secret information, and will activate the record specific to OpCo 2 and de-activate the record specific to OpCo 1.

The SIM management centre 10 will at this time hold all the necessary information relating to the SIM card - in the same way as it did initially when the card was manufactured by the SIM supplier 14 which supplied this information to the SIM management centre 10 (see Step D). Thus, the SIM management centre 10 will hold the original information received from the SIM supplier concerning the SIM card and will now hold the new IMSI (obtained from OpCo 2) (see Step J) and will also know the secret information relating to OpCo 2. Therefore, the SIM management centre 10 can now supply all this information to OpCo 2 (Step L). Just as when this information was originally sent to OpCo 1 (Step E), the information sent to OpCo 2 will be in the same general format as the format in which such information is received by operating networks from the SIM supplier in accordance with the known SIM activation process.

When OpCo 2 now receives a request to activate the SIM card within the network of OpCo 2, it has all the necessary information with which to activate the SIM within that network, as its new home network, such as by OTA transmissions (Step M).

In an exactly similar fashion, the SIM card can, if desired, be re-registered into a third network in the group of networks. Thus, using such a process, some or all of the users in some or all of the networks in the group can have their SIMs re-registered into the common or virtual network. In this way, a controlling entity owning or controlling a number of different networks such as in different countries in a particular geographical region (e.g. Europe) could in a simple fashion effectively amalgamate all the networks into single network extending over substantially the whole of the region.

It would not be necessary, of course, to amalgamate all users into the common or virtual network. For example, it would be possible to offer selected users (e.g. business users willing to pay an extra subscription) the possibility of joining this new network could offer the advantage of broad geographical coverage without extra "roaming" charges applicable when moving from the network in one country to a network in another country.

Because the secret and authentication information relating to each of the networks in the group of networks (including the common or virtual network) is already stored on the SIM card, so that the secret information relating to a particular one of the networks merely has to be activated on the SIM card, there is optimum maintenance of security - because none of the secret information has to be transmitted to the SIM card and rewritten on the SIM card.

Although it is advantageous to use a central SIM management centre 10 for managing the transfer of the SIM card between networks, this is not essential. Instead, the necessary functions could be carried out by the operating companies of the networks.

## Claims

1. A mobile telecommunications system, comprising a plurality of different predetermined networks (18,20); a plurality of terminals for use in the system; a plurality of smart cards, each terminal being usable in a particular one of the networks (18,20) in association with one of the smart cards when that smart card is registered with that network; and registration means (10) for registering each smart card with a particular one of the networks as its home network, each smart card carrying secret information specific to the home network (18,20) with which the smart card is registered and by means of which that network can authenticate the smart card and allow use of the terminal with which that smart card is associated in that network (18,20); and **characterised in that** the registration means (10) is adapted to de-register each smart card from the network with which it is registered as its home network and to re-register each smart card with a common further network as its home network, and which is not included in the predetermined networks (18,20), by the registration means obtaining from said one of the networks (18,20) data including an International Mobile Subscriber Identifier - IMSI - particular to and for use with said further network, transmitting said IMSI to the smart card, and activating the secret information relating to a particular one of the networks (18,20) when registering or re-registering the smart card with said further network (18,20).

2. A system according to claim 1, in which the registration means (10) is separate from and common to all the networks (18,20).

3. A system according to claim 1 or 2, in which each smart card also carries the secret information specific to all the other networks (18,20) in the system including the common further network (18,20), and in which the registration means (10) includes means for activating the secret information relating to a particular one of the networks (18,20) when registering or re-registering the smart card with that network.

4. A system according to any preceding claim, in which the common further network (18,20) is a virtual network.

5. A system according to any preceding claim, in which the networks (18,20) are GSM or UMTS networks and the smart cards are SIM cards for use therein.

6. A mobile telecommunications method for use with a plurality of different predetermined networks (18,20), a plurality of terminals and a plurality of smart cards, each terminal being usable in a particular one of the networks (18,20) in association with one of the smart cards when that smart card is registered with that network, and each smart card carrying secret information specific to the home network (18,20) with which the smart card is registered and by means of which that network can authenticate the smart card and allow use of the terminal with which that smart card is associated in that network (18,20); the method including registering each smart card with a particular one of the networks as its home network, and **characterised by** selectively de-registering each smart card from the network with which it is registered as its home network and reregistering each smart card with a common further network as its home network, and which is not included in the predetermined networks (18,20), by obtaining from said one of the networks (18,20) data including an International Mobile Subscriber Identifier - IMSI - particular to and for use with said further network, transmitting said IMSI to the smart card, and activating the secret information relating to a particular one of the networks (18,20) when registering or re-registering the smart card with said further network (18,20).

7. A method according to claim 6, in which the registration and re-registration steps are controlled from outside the networks (18,20).

8. A method according to claim 6, including the step of storing on each smart card the secret information specific to all the other networks (18,20) in the system including the common further network, and in which the registration or re-registration step activates the secret information relating to a particular one of the networks (18,20) when registering or re-registering the smart card with that network (18,20).

9. A method according to any one of claims 6 to 8, in which the further common network is a virtual network (18,20).

10. A method according to any one of claims 6 to 9, in which the networks (18,20) are GSM or UMTS networks and the smart cards are SIM cards for use therein.

## Patentansprüche

1. Mobiles Telekommunikationssystem, das Folgendes umfasst: mehrere verschiedene vorbestimmte Netzwerke (18,20); mehrere Endgeräte für die Verwendung in dem System; mehrere Chipkarten, wobei jedes Endgerät in einem bestimmten der Netzwerke (18, 20) in Assoziation mit einer der Chipkarten verwendet werden kann, wenn diese Chipkarte bei diesem Netzwerk registriert ist; und Registrierungsmittel (10) zum Registrieren jeder Chipkarte bei einem bestimmten der Netzwerke als sein Heimatnetzwerk, wobei jede Chipkarte geheime Informationen trägt, die für das Heimatnetzwerk (18, 20) spezifisch sind, bei dem die Chipkarte registriert ist, und anhand derer dieses Netzwerk die Chipkarte authentifizieren und die Benutzung des Endgeräts zulassen kann, bei dem diese Chipkarte in diesem Netzwerk (18, 20) assoziiert ist; und **dadurch gekennzeichnet, dass** das Registrierungsmittel (10) die Aufgabe hat, jede Chipkarte bei dem Netzwerk zu deregistrieren, bei dem es als sein Heimatnetzwerk registriert ist, und jede Chipkarte bei einem gemeinsamen weiteren Netzwerk als sein Heimatnetzwerk neu zu registrieren, und das nicht in den vorbestimmten Netzwerken (18, 20) enthalten ist, indem das Registrierungsmittel von dem genannten einen der Netzwerke (18, 20) Daten inklusive einer IMSI (International Mobile Subscriber Identifier) einholt, die für das genannte weitere Netzwerk und die Verwendung damit spezifisch sind, die genannte IMSI zu der Chipkarte sendet und die geheimen Informationen über ein bestimmtes der Netzwerke (18, 20) beim Registrieren oder Deregistrieren der Chipkarte bei dem genannten weiteren Netzwerk (18, 20) aktiviert.

2. System nach Anspruch 1, bei dem das Registrierungsmittel (10) von allen Netzwerken (18, 20) separat und ihnen gemeinsam ist.

3. System nach Anspruch 1 oder 2, wobei jede Chipkarte auch die geheimen Informationen trägt, die für alle anderen Netzwerke (18, 20) in dem System inklusive dem gemeinsamen weiteren Netzwerk (18, 20) spezifisch sind, and wobei das Registrierungsmittel (10) Mittel zum Aktivieren der geheimen Informationen über ein bestimmtes der Netzwerke (18, 20) beim Registrieren oder Deregistrieren der Chipkarte bei diesem Netzwerk beinhaltet.

4. System nach einem der vorherigen Ansprüche, bei dem das gemeinsame weitere Netzwerk (18, 20) ein virtuelles Netzwerk ist.

5. System nach einem der vorherigen Ansprüche, bei dem die Netzwerke (18, 20) GSM- oder UMTS-Netzwerke und die Chipkarten SIM-Karten für die Verwendung darin sind.

6. Mobiltelekommunikationsverfahren für die Verwendung mit mehreren verschiedenen vorbestimmten Netzwerken (18, 20), mehreren Endgeräten und mehreren Chipkarten, wobei jedes Endgerät mit einem bestimmten der Netzwerke (18, 20) in Assoziation mit einer der Chipkarten verwendet werden kann, wenn diese Chipkarte bei diesem Netzwerk registriert ist, und wobei jede Chipkarte geheime Informationen trägt, die für das Heimatnetzwerk (18, 20) spezifisch sind, bei dem die Chipkarte registriert ist, und anhand derer dieses Netzwerk die Chipkarte authentifizieren und die Verwendung des Endgerätes zulassen kann, mit dem diese Chipkarte in diesem Netzwerk (18, 20) assoziiert ist; wobei das Verfahren das Registrieren jeder Chipkarte bei einem bestimmten der Netzwerke als sein Heimatnetzwerk beinhaltet, und **gekennzeichnet durch** selektives Deregistrieren jeder Chipkarte von dem Netzwerk, bei dem es als sein Heimatnetzwerk registriert ist, und Neuregistrieren jeder Chipkarte bei einem gemeinsamen weiteren Netzwerk als sein Heimatnetzwerk, und das nicht in den vorbestimmten Netzwerken (18, 20) enthalten ist, **durch** Einholen, von dem genannten einen der Netzwerke (18, 20), von Daten inklusive einer IMSI (International Mobile Subscriber Identifier), die für das genannte weitere Netzwerk und die Verwendung damit spezifisch ist, Senden der genannten IMSI zu der Chipkarte und Aktivieren der geheimen Informationen über ein bestimmtes der Netzwerke (18, 20) beim Registrieren oder Deregistrieren der Chipkarte bei dem genannten weiteren Netzwerk (18, 20).

7. Verfahren nach Anspruch 6, bei dem die Schritte des Registrierens und Deregistrierens von außerhalb der Netzwerke (18, 20) gesteuert werden.

8. Verfahren nach Anspruch 6, das den Schritt des Speicherns, auf jeder Chipkarte, der geheimen Informationen beinhaltet, die für alle anderen Netzwerke (18, 20) in dem System inklusive dem gemeinsamen weiteren Netzwerk spezifisch sind, und wobei in dem Schritt des Registrierens oder Neuregistrierens die geheimen Informationen über ein bestimmtes der Netzwerke (18, 20) beim Registrieren oder Neuregistrieren der Chipkarte bei diesem Netzwerk (18, 20) aktiviert werden.

9. Verfahren nach einem der Ansprüche 6 bis 8, bei dem das weitere gemeinsame Netzwerk ein virtuelles Netzwerk (18, 20) ist.

10. Verfahren nach einem der Ansprüche 6 bis 9, bei dem die Netzwerke (18, 20) GSM- oder UMTS-Netzwerke sind und die Chipkarten SIM-Karten für die Verwendung darin sind.

## Revendications

1. Système de télécommunications mobiles, comprenant une pluralité de différents réseaux prédéterminés (18, 20) ; une pluralité de terminaux destinés à être utilisés dans le système ; une pluralité de cartes à puce, chaque terminal étant utilisable dans un réseau spécifique parmi les réseaux (18, 20) en association avec l'une des cartes à puce lorsque la carte à puce en question est enregistrée auprès du réseau en question ; et des moyens d'enregistrement (10) destinés à enregistrer chaque carte à puce auprès d'un réseau spécifique parmi les réseaux pour qu'il soit son réseau de base, chaque carte à puce portant des informations secrètes propres au réseau de base (18, 20) auprès duquel la carte à puce est enregistrée et grâce auxquelles le réseau en question peut authentifier la carte à puce et autoriser l'utilisation du terminal avec lequel la carte à puce en question est associée dans le réseau en question (18, 20) ; et **caractérisé en ce que** les moyens d'enregistrement (10) sont conçus de façon à dés-enregistrer chaque carte à puce du réseau avec lequel elle est enregistrée pour qu'il soit son réseau de base et à ré-enregistrer chaque carte à puce auprès d'un réseau supplémentaire commun pour qu'il soit son réseau de base, et qui n'est pas inclus dans les réseaux prédéterminés (18, 20), du fait que les moyens d'enregistrement obtiennent dudit réseau parmi les réseaux (18, 20) des données englobant un Identifiant International d'abonné au Réseau Mobile - IMSI (forme abrégée en anglais) - lequel est spécifique audit réseau supplémentaire et destiné à être utilisé avec ce réseau, transmettent ledit IMSI à la carte à puce, et activent les informations secrètes relatives à un réseau spécifique parmi les réseaux (18, 20) lorsqu'il s'agit d'enregistrer ou de ré-enregistrer la carte à puce auprès dudit réseau supplémentaire (18,20).

2. Système selon la revendication 1, les moyens d'enregistrement (10) étant séparés de tous les réseaux (18, 20) et communs à tous réseaux (18, 20).

3. Système selon la revendication 1 ou 2, dans lequel chaque carte à puce porte également les informations secrètes propres à tous les autres réseaux (18, 20) présents dans le système, y compris le réseau supplémentaire commun (18, 20), et dans lequel les moyens d'enregistrement (10) englobent des moyens pour activer les informations secrètes relatives à un réseau spécifique parmi les réseaux (18, 20) lorsqu'il s'agit d'enregistrer ou de ré-enregistrer la carte à puce auprès du réseau en question.

4. Système selon l'une quelconque des revendications précédentes, dans lequel le réseau supplémentaire commun (18, 20) est un réseau virtuel.

5. Système selon l'une quelconque des revendications précédentes, dans lequel les réseaux (18, 20) sont des réseaux GSM ou UMTS et les cartes à puce sont des cartes SIM destinées à être utilisées dans ceux-ci.

6. Procédé de télécommunications mobiles destiné à être utilisé avec une pluralité de différents réseaux prédéterminés (18, 20), une pluralité de terminaux et une pluralité de cartes à puce, chaque terminal étant utilisable dans un réseau spécifique parmi les réseaux (18, 20) en association avec l'une des cartes à puce lorsque la carte à puce en question est enregistrée auprès du réseau en question, et chaque carte à puce portant des informations secrètes propres au réseau de base (18, 20) auprès duquel la carte à puce est enregistrée et grâce auxquelles le réseau en question peut authentifier la carte à puce et autoriser l'utilisation du terminal avec lequel la carte à puce en question est associée dans le réseau en question (18, 20) ; le procédé englobant l'opération consistant à enregistrer chaque carte à puce auprès d'un réseau spécifique parmi les réseaux pour qu'il soit son réseau de base, et **caractérisé par** les opérations consistant à dés-enregistrer de façon sélective chaque carte à puce du réseau avec lequel elle est enregistrée pour qu'il soit son réseau de base et à ré-enregistrer chaque carte à puce auprès d'un réseau supplémentaire commun pour qu'il soit son réseau de base, et qui n'est pas inclus dans les réseaux prédéterminés (18, 20), du fait que l'on obtient dudit réseau parmi les réseaux (18, 20) des données englobant un Identifiant International d'abonné au Réseau Mobile - IMSI (forme abrégée en anglais) - lequel est spécifique audit réseau supplémentaire et destiné à être utilisé avec ce réseau, que l'on transmet ledit IMSI à la carte à puce, et que l'on active les informations secrètes relatives à un réseau spécifique parmi les réseaux (18, 20) lorsqu'il s'agit d'enregistrer ou de ré-enregistrer la carte à puce auprès dudit réseau supplémentaire (18, 20).

7. Procédé selon la revendication 6, les étapes d'enregistrement et de ré-enregistrement étant pilotées de l'extérieur des réseaux (18, 20).

8. Procédé selon la revendication 6, englobant l'étape consistant à stocker sur chaque carte à puce les informations secrètes propres à tous les autres réseaux (18, 20) présents dans le système, y compris le réseau supplémentaire commun, et dans lequel l'étape d'enregistrement ou de ré-enregistrement active les informations secrètes relatives à un réseau spécifique parmi les réseaux (18, 20) lorsqu'il s'agit d'enregistrer ou de ré-enregistrer la carte à puce auprès du réseau en question (18, 20).

9. Procédé selon l'une quelconque des revendications 6 à 8, dans lequel le réseau commun supplémentaire est un réseau virtuel (18, 20).

10. Procédé selon l'une quelconque des revendications 6 à 9, dans lequel les réseaux (18, 20) sont des réseaux GSM ou UMTS et les cartes à puce sont des cartes SIM destinées à être utilisées dans ceux-ci.
